## Europäisches Patentamt

(19) **European Patent Office**

**Office européen des brevets**

(11) Veröffentlichungsnummer: **0 018 564**
**B1**

(12) # EUROPÄISCHE PATENTSCHRIFT

(45) Veröffentlichungstag der Patentschrift:
**12.01.83**

(51) Int. Cl.³: **G 03 B 41/18**

(21) Anmeldenummer: **80102111.4**

(22) Anmeldetag: **18.04.80**

(54) **Filmkassette.**

(30) Priorität: **20.04.79 GB 7913880**

(43) Veröffentlichungstag der Anmeldung:
**12.11.80 Patentblatt 80/23**

(45) Bekanntmachung des Hinweises auf die Patenterteilung:
**12.01.83 Patentblatt 83/2**

(84) Benannte Vertragsstaaten:
**BE CH DE FR GB IT LI**

(56) Entgegenhaltungen:
**DE-B-1 112 887**
**DE-C-949 980**
**US-A-3 704 369**

(73) Patentinhaber: **CIBA-GEIGY AG, Patentabteilung Postfach, CH-4002 Basel (CH)**

(72) Erfinder: **Turner, George Frederick Albert Marriott, "Monks Acres" Woolmongers Lane Blackmore, Ingatestone Essex CM4 0JX (GB)**

(74) Vertreter: **Berg, Wilhelm, Dr. et al, Dr. Berg, Dipl.-Ing. Stapf, Dipl.-Ing. Schwabe, Dr. Dr. Sandmair Mauerkircherstrasse 45, D-8000 München 80 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

## Filmkassette

Die Erfindung betrifft eine Filmkassette für blattförmiges Filmmaterial und betrifft, insbesondere, eine Röntgenfilmkassette.

Wenn Röntgenfilme belichtet werden, sind sie im allgemeinen zwischen zwei Röntgenstrahl-Verstärkerschirmen in einer flachen Filmkassette angeordnet. Normalerweise werden derartige Kassetten von Hand im Dunkeln mit einem Film geladen und ebenfalls im Dunkeln wieder entladen. In jüngster Zeit ist jedoch eingeführt worden, dass derartige Kassetten in einem Filmlader geladen und in einer filmverarbeitenden Einrichtung entladen werden, wobei diese beiden Vorgänge bei Tageslicht vorgenommen werden, ohne dass sich entweder der Filmlader oder die Verarbeitungseinrichtung in einem dunklen Raum befinden müssen.

Manche der Kassetten, die bei Tageslicht geladen und entladen werden können, weisen einen Rahmen auf, an welchem eine im wesentlichen ebene, feste Aussenplatte und eine im wesentlichen ebene, feste Bodenplatte angebracht sind, zwischen welchen eine verschiebbare Andrückplatte angeordnet ist, die federnd gegen die Bodenplatte gedrückt wird, wenn die Kassette geschlossen ist. Die Kassette weist an einem Ende des Rahmens einen Schlitz zum Laden oder Entladen der Kassette und eine lichtabschirmende Einrichtung auf, welche verhindert, dass Licht zwischen die Andrückplatte und die Bodenplatte eindringt, wenn die Kassette geschlossen ist. Gewöhnlich ist ein verstärkender Schirm an der Innenfläche der Bodenplatte angebracht, und ein weiterer verstärkender Schirm ist an der der Innenfläche der Bodenplatte gegenüberliegenden Fläche der Andrückplatte angebracht. Während des Betriebs ist der Röntgenfilm zwischen den zwei Schirmen angeordnet, wobei die Andrückplatte zur Bodenplatte hin unter Druck gesetzt ist. Wenn die Kassette geöffnet wird, wird die Andrückplatte von der Bodenplatte angehoben, und der Platz dazwischen reicht dann aus, um den Röntgenfilm zwischen den zwei Schirmen aus der Kassette herauszunehmen. Eine derartige Kassette ist in der GB-PS Nr. 1361012, und eine andere derartige Kassette ist in der US-PS Nr. 3930165, beschrieben.

Röntgenfilmkassetten, welche einen Rahmen aufweisen, an welchem eine im wesentlichen ebene, feste Aussenplatte und eine im wesentlichen ebene, feste Bodenplatte angebracht sind, zwischen welchen eine verschiebbare Andrückplatte angeordnet ist, die federnd gegen die Bodenplatte gedrückt wird, wenn die Kassette geschlossen ist, welche aber von der Bodenplatte angehoben wird, wenn die Kassette geöffnet wird, und bei welchen Kassetten an einem Ende des Rahmens ein Schlitz zum Laden oder Entladen der Kassette und eine lichtabschirmende Einrichtung vorgesehen ist, welche, wenn die Kassette geschlossen ist, verhindert, dass Licht zwischen die Andrückplatte und die Bodenplatte eindringt, werden nachstehend als Kassetten mit festen Platten bezeichnet.

Eine der Schwierigkeiten bei solchen Kassetten mit festen Platten besteht darin, dass es schwierig ist, in dem kleinen, zur Verfügung stehenden Raum einen wirksamen Andrückplatten-Betätigungsmechanismus vorzusehen, da die Abmessungen der Kassette durch internationale Normen festgelegt sind und die maximale Dicke der Kassette 1,5 cm ist. Die verschiedenen, bereits vorgeschlagenen Andrückplatten-Betätigungseinrichtungen sind mechanisch oft unzuverlässig und weisen verschiedene mechanische Unzulänglichkeiten auf. Wegen der geringen Toleranzen, die sowohl bei der maschinellen Bearbeitung der mechanischen Teile als auch beim Zusammenbau der Kassette gefordert werden, sind die Kassetten verhältnismässig teuer.

Gemäss der Erfindung soll daher eine Einrichtung zum Betätigen der Andrückplatten in Kassetten der vorstehend beschriebenen Art mit festen Platten geschaffen werden, welche sich nur teilweise und dann nur mittelbar auf mechanische Einrichtungen verlässt. Gemäss der Erfindung ist dies bei einer Kassette der vorbeschriebenen Art mit festen Platten durch die Merkmale im kennzeichnenden Teil des Anspruchs 1 erreicht.

Vorzugsweise wird eine parallel angeordnete Deckplatte mittels zwei Schubstangen oder -teilen verschoben, welche mit der parallelen Deckplatte verbunden sind, und welche jeweils auf verschiedenen Seiten des Rahmens für eine lineare Bewegung zwischen einer ersten Stellung, welche dem geschlossenen Zustand der Kassette entspricht, und einer zweiten Stellung, welche dem offenen Zustand der Kassette entspricht, festgelegt sind. Bei einer Ausführungsform der Filmkassette sind die Schubstangen jeweils mit der Deckplatte verbunden, und die Deckplatte wird zusammen mit den Schubstangen verschoben, wenn sie linear bewegt werden, wobei sie sich dann in ihrer eigenen Ebene bewegt. Bei einer anderen Ausführungsform der Filmkassette gemäss der Erfindung sind die Schubstangen jeweils durch druckausübende Einrichtungen mit der Deckplatte verbunden, und wenn die Schubstangen betätigt werden, wird die Deckplatte unter rechtem Winkel zu der linearen Verschiebungsbahn der Stangen quer zu der Kassette verschoben.

Vorzugsweise sind die druckausübenden Einrichtungen eine Reihe von aneinanderliegenden Teilen, die an den Schubstangen und an der Deckplatte festgelegt sind.

Vorzugsweise ist dünnes Kunststoffmaterial mit einer geringen Reibung an der Oberfläche zwischen zwei Magnetanordnungen vorgesehen. Als Kunststoff eignet sich eine dünne Lage aus Polytetrafluoräthylen. Durch das zwischen den zwei Magnetanordnungen vorgesehene Kunststoffmaterial werden die von den zwei Magnetanordnungen aufeinander ausgeübten Abstossungskräfte nicht nennenswert geschwächt, son-

dern das Kunststoffmaterial dient dazu, die Anziehungskraft zu begrenzen und die Reibung zwischen den zwei Magnetanordnungen zu verringern, wenn die Kassette geöffnet ist. Auch kann dadurch die Deckplatte leichter bewegt werden, wenn die Schubteile betätigt werden.

Die Magnetanordnung an der Deckplatte weist eine Reihe von einzelnen Magneten auf, oder sie kann eine dünne Platte sein, in welcher eine Magnetanordnung integriert ist. Wenn eine gesonderte Andrückplatte verwendet wird, können an dieser in ähnlicher Weise einzelne Magnete angebracht sein, oder sie kann eine dünne Platte mit einer in dieser integrierten Magnetanordnung aufweisen. Vorzugsweise sind die beiden Magnetanordnungen in gleicher Weise ausgeführt. Als Material, das in sich eine Magnetanordnung enthält, eignet sich insbesondere Material, das unter der Bezeichnung magnetischer Gummi bekannt ist, welcher von der Fa. James Niell & Co., Sheffield, vertrieben wird.

In einer vorteilhaften Ausführungsform weist die dünne Platte über ihre ganze Breite eine Reihe von Nordpolen auf, und in einem bestimmten Abstand ebenfalls über die ganze Plattenbreite eine Reihe von Südpolen, was sich dann über die ganze Länge der Platte wiederholt. Jedoch kann das magnetische Muster so lang wie möglich sein, um dadurch dafür zu sorgen, dass bei den zwei Magnetanordnungen gleichnamige oder ungleichnamige Pole in den zwei Zuständen der Kassette, d.h. dem offenen und dem geschlossenen Zustand, einander zugeordnet sind.

Bei einer anderen vorteilhaften Ausführungsform werden zwei dünne Platten mit integrierten Magneten verwendet, deren Pole so angeordnet sind, dass die maximale Abstossungskraft, aber nicht die maximale Anziehungskraft, erreicht wird. Dies ist manchmal wünschenswert, da durch die magnetische Anziehung die magnetischen Platten aneinandergezogen werden, und der verringerte Abstand zu einer magnetischen Anziehungskraft führt, welche stärker ist als eine magnetische Abstossungskraft.

Die einzelnen, in der erfindungsgemässen Kassette verwendeten Magnete müssen dünn sein und sind vorzugsweise nicht dicker als 1,75 mm. Als Magnete eignen sich insbesondere flache Stabmagnete, die von der Fa. James Niell & Co. unter der Bezeichnung Eclipse vertrieben werden. Vorzugsweise sind die Magnete mittels eines Klebstoffs sowohl an der Andrückplatte als auch an der Deckplatte befestigt. Als Klebstoffe eignen sich Epoxyharze und beidseitig klebende Klebebänder.

Vorzugsweise sind ein röntgenstrahlenverstärkender Schirm auf der Innenseite der Bodenplatte und ein weiterer röntgenstrahlenverstärkender Schirm auf der Unterseite der Andrückplatte angebracht, d.h. auf der Seite, welche in dem geschlossenen Zustand der Kassette gegen die Bodenplatte gedrückt wird.

Somit weist die Kassette gemäss der Erfindung einen flachen Rahmen mit festen Aussen- und Bodenplatten und einen Schlitz an einem Ende des Rahmens zum Einführen und Herausnehmen des Films auf. Der Schlitz wird durch ein lichtabschirmendes Teil verschlossen, wenn sich die Kassette in dem geschlossenen Zustand befindet, jedoch wird das abschirmende Teil von dem Schlitz entfernt, wenn sich die Kassette in dem offenen Zustand befindet. Ob sich die Kassette in dem offenen oder geschlossenen Zustand befindet, ist durch die Lage der Andrückplatte festgelegt, welche in der Kassette zwischen der festliegenden Aussenplatte und der festliegenden Bodenplatte angeordnet ist. Wenn die Andrückplatte gegen die Bodenplatte gedrückt wird, ist durch sie ein Film festgehalten, welcher auf der Bodenplatte oder, falls vorhanden, auf dem Verstärkerschirm an der Bodenplatte angeordnet ist.

Wenn die Andrückplatte von der Bodenplatte angehoben wird, kann ein dazwischen vorhandener Film aufgrund seines Gewichts ohne weiteres herausfallen, wenn die Kassette so gehalten wird, dass der Schlitz nach unten weist. In ähnlicher Weise kann die Kassette in der offenen Stellung ohne weiteres dadurch geladen werden, dass der Film entweder aufgrund seines Gewichts oder mittels Rollen oder ähnlicher Einrichtungen eingebracht wird.

Vorzugsweise wird die Kassette durch Drücken von zwei Schubteilen geöffnet und geschlossen. Vorzugsweise sind diese Teile federbelastet, so dass die Kassette in dem geschlossenen Zustand bleibt, wenn die Stäbe nicht gegen die Federn gedrückt werden. Entsprechende Einrichtungen mit zwei Magnetanordnungen können auch zum Öffnen und Schliessen der lichtabschirmenden Einrichtung verwendet werden.

Es sind auch verschiedene aufklappbare Röntgenfilmkassetten bekannt, bei welchen der Film durch magnetische Anziehung an den Verstärkerschirmen in satte Anlage kommt. Beispiele für solche Kassetten sind in den DE-PS Nrn. 2802730, 1112887 und 949980, den US-PS Nrn. 2694153, 2590891 und 2590892 sowie auch in der GB-PS Nr. 667325 beschrieben. Die in diesen Patentschriften beschriebenen, aufklappbaren Kassetten unterscheiden sich sehr stark von den erfindungsgemässen Kassetten mit festen Platten, welche für ein Laden und Entladen bei Tageslicht verwendet werden können. Darüber hinaus spielt die magnetische Anziehung beim Öffnen oder Schliessen der Kassette keine Rolle.

In der US-PS Nr. 3704369 ist eine weitere Ausführungsform einer Röntgenfilmkassette beschrieben. Bei dieser Kassette werden die Anziehungs- oder Abstossungskräfte von magnetischen Platten ausgenutzt, um den Röntgenfilm und die Verstärkerschirme in engen Kontakt zu bringen. Jedoch handelt es sich bei dieser Ausführungsform nicht um eine Kassette mit feststehenden Platten. Darüber hinaus kann bei dieser Ausführungsform bei Tageslicht der Film weder von Hand noch mit Hilfe einer automatischen Lade- und Entladeeinrichtung eingebracht oder herausgenommen werden. Vielmehr muss sie im Dunkeln von Hand geöffnet werden, und dann muss der Film im Dunkeln herausgenommen werden. Die magnetische Anziehung oder Abstossung spielt beim Öffnen oder Schliessen dieser Kassette keine Rolle.

Nachfolgend werden bevorzugte Ausführungsformen der Erfindung anhand der anliegenden Zeichnungen im einzelnen erläutert. Es zeigen:

Fig. 1 eine isometrische Aussenansicht einer Kassette gemäss der Erfindung,

Fig. 2 einen Längsschnitt durch eine Filmkassette gemäss der Erfindung in geöffnetem Zustand, wobei die Deckplatte mit den Schubteilen verbunden und linear bewegbar ist,

Fig. 3 die gleiche Schnittansicht wie in Fig. 2, wobei jedoch die Kassette geschlossen ist,

Fig. 4 und 5 eine Draufsicht auf einen Teil der im Inneren der Kassette nach Fig. 2 und 3 angeordneten Teile,

Fig. 6 eine Draufsicht auf einen Teil der im Inneren einer Filmkassette gemäss der Erfindung angeordneten Teile, wobei die Schubstangen mit der Deckplatte über keilförmige Teile in Verbindung stehen und die Deckplatte quer zur Kassette verschiebbar ist, und

Fig. 7 und 8 schematische Darstellungen, in welchen gezeigt ist, wie die maximale Anziehung zwischen zwei magnetischen Platten verringert werden kann.

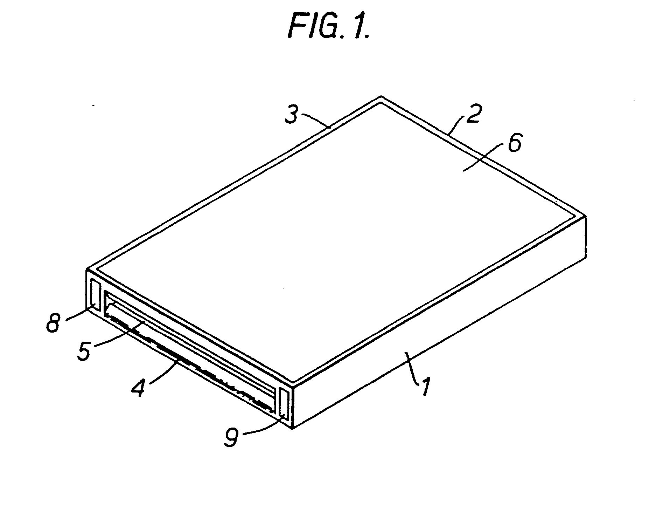

In den Fig. 1 bis 5 sind die gleichen Teile mit denselben Bezugszeichen bezeichnet. In Fig. 1 weist eine Kassette Seitenwandungen 1, 3 und Endwandungen 2, 4 auf. In der Endwandung 4 ist ein Schlitz 5 ausgebildet, über welchen die Kassette mit einem Röntgenfilm geladen und wieder geleert werden kann. Die Kassette weist eine feststehende Aussenplatte 6 und eine ähnliche feststehende Bodenplatte 7 auf, welche in Fig. 1 nicht dargestellt ist. Auf beiden Seiten des Schlitzes 5 sind die Enden von kurzen Schubstangen oder -teilen 8 und 9 dargestellt.

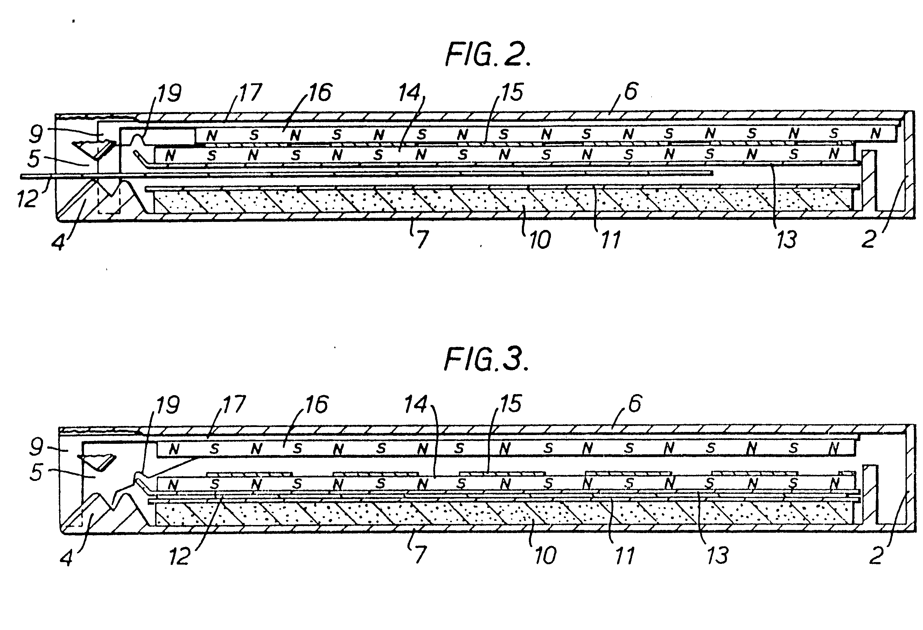

In Fig. 2 und 3 sind die feststehende Aussenplatte 6 und die feststehende Bodenplatte 7 sowie die Endwandungen 2 und 4 und der Schlitz 5 in der Endwandung 4 dargestellt.

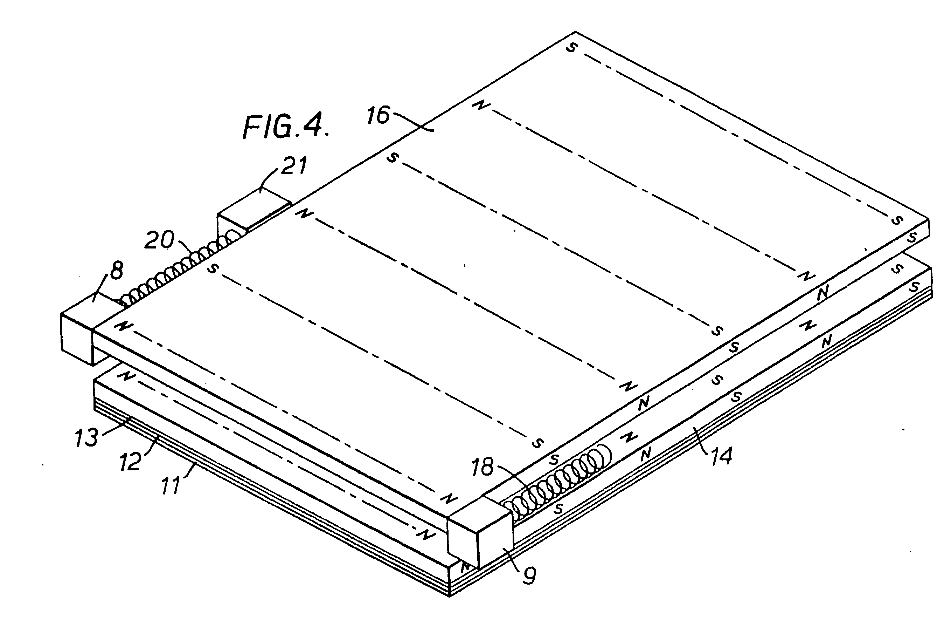

In der Kassette sind ein Streifen Schaumstoff 10, welcher auf der Innenseite der Bodenplatte 7 befestigt ist, und ein Röntgenstrahlen-Verstärkerschirm 11 vorgesehen. Über dem Schirm 11 ist ein Röntgenfilm 12 und über diesem ist ein weiter Röntgenstrahl-Verstärkerschirm 13 dargestellt. Ferner ist eine dünne Andrückplatte 14 vorgesehen, welche eine Anordnung aus integrierten Magneten enthält. Die Verteilung der Magnetpole ist dargestellt. Auf der dünnen Platte 14 ist eine dünne Lage aus Polyfluoräthylen angebracht. Über der Lage 15 ist eine dünne Platte 16 vorgesehen, die eine Anordnung von integrierten Magneten 16 trägt, und welche an der Unterseite einer Halteplatte 17 angebracht ist. Die Verteilung der Magnetpole ist in Fig. 2 und 3 dargestellt. An der Halteplatte 17 ist ein kurzes Schubteil 9 angebracht, das in Fig. 4 dargestellt ist. Am Ende des Schubteils 9 greift eine (ebenfalls in Fig. 4 dargestellte) Feder 18 an. Eine lichtabschirmende Einrichtung 19 ist an der dünnen Platte 16 angebracht.

In Fig. 3 sind genau dieselben Teile wie in Fig. 2 dargestellt; jedoch ist die Andrückplatte 14 gegen die Bodenplatte 7 gedrückt, wobei der Film 12 zwischen den beiden Schirmen 11 und 13 angeordnet und festgelegt ist. In Fig. 2 liegen ungleichnamige Pole der zwei Magnetanordnungen einander gegenüber, während in Fig. 3 die gleichnamigen Pole in den beiden Magnetanordnungen einander gegenüberliegen.

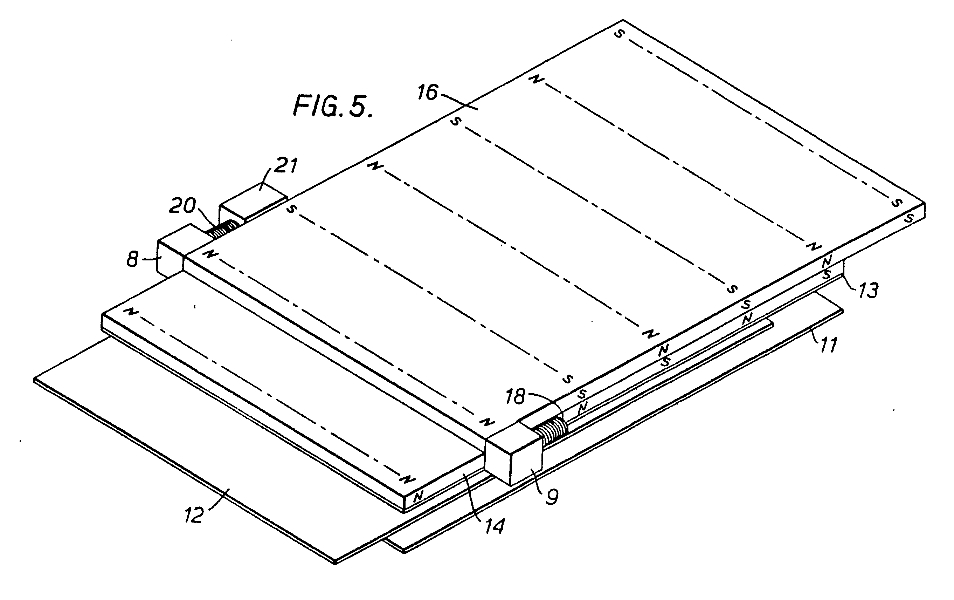

In Fig. 4 und 5 sind die wesentlichen Teile im Inneren der Kassette dargestellt (d.h. der Rahmen ist entfernt). Auch die Halteplatte, an welcher die kurzen Schubteile 8 und 9 angebracht sind, ist weggelassen. Ferner sind in Fig. 4 und 5 eine weitere Feder 20, welche gegen das Schubteil 8 drückt, und ein Widerlagerteil 21 dargestellt, das an dem Rahmen angebracht ist. Ein ähnliches (jedoch nicht dargestelltes) Widerlagerteil ist auf der anderen Seite der Kassette bei der Feder 18 vorgesehen. Wenn die Schubteile 8 und 9 hineingedrückt werden, werden die Federn 18 und 20 gegen die ihnen zugeordneten Widerlagerteile gedrückt.

In Fig. 4 und 5 sind insbesondere die quer über die beiden Platten 14 und 16 verlaufenden, parallelen Reihen von Magnetpolen dargestellt. Ferner ist gezeigt, wie bei dem geöffneten Zustand der Kassette die freien Nordpole gegenüber den Reihen Südpolen angeordnet sind, wodurch die Platte 14 zu der Platte 16 hin angehoben wird, während in dem geschlossenen Zustand der Kassette die Reihen Nordpole gegenüber Reihen von Südpolen angeordnet sind, wodurch die Platten 14 und 16 auseinandergedrückt werden.

Die Kassette wird normalerweise so aufbewahrt, wie in Fig. 3 dargestellt ist, und zwar unabhängig davon, ob in ihr ein Röntgenfilm vorhanden ist oder nicht. Jedoch ist es in Krankenhäusern allgemein üblich, Röntgenfilmkassetten geladen aufzubewahren. Um die Kassette zu laden, wird eine in Fig. 3 dargestellte Kassette in eine Kassettenladeeinrichtung eingebracht, wie sie beispielsweise in der GB-PS Nr. 1361014 oder der DE-OS Nr. 2812368 beschrieben ist.

Wenn die Kassette in eine derartige Ladeeinrichtung eingebracht ist, wird die offene Seite lichtdicht verschlossen, und Widerlagerteile in der Ladeeinrichtung drücken gegen die Enden der Schubteile 8 und 9. Hierdurch wird die Deckplatte entgegen der Kraft der Federn 18 und 20 verschoben, und die Magnetanordnung 16 wird bezüglich der Magnetanordnung 14 bewegt, so dass nunmehr ungleichnamige Pole einander gegenüberliegen. Durch die sich ergebende Anziehungskraft zwischen den zwei Magnetanordnungen wird die Andrückplatte 14 zu der Halteplatte 17 angezogen, und folglich wird die Kassette geöffnet. Die Kassette befindet sich dann in dem geöffneten Zustand, wie in Fig. 2 dargestellt ist. Der Röntgenfilm fällt dann in die Kassette, wenn sie senkrecht angeordnet ist, oder wird mittels einer Ladeeinrichtung in die Kassette eingebracht. Die Kassette wird dann aus der Ladeeinrichtung herausgenommen und der Druck auf die Schubteile 8 und 9 aufgehoben. Die Kassette befindet sich dann in dem in Fig. 3 dargestellten, geschlossenen Zustand.

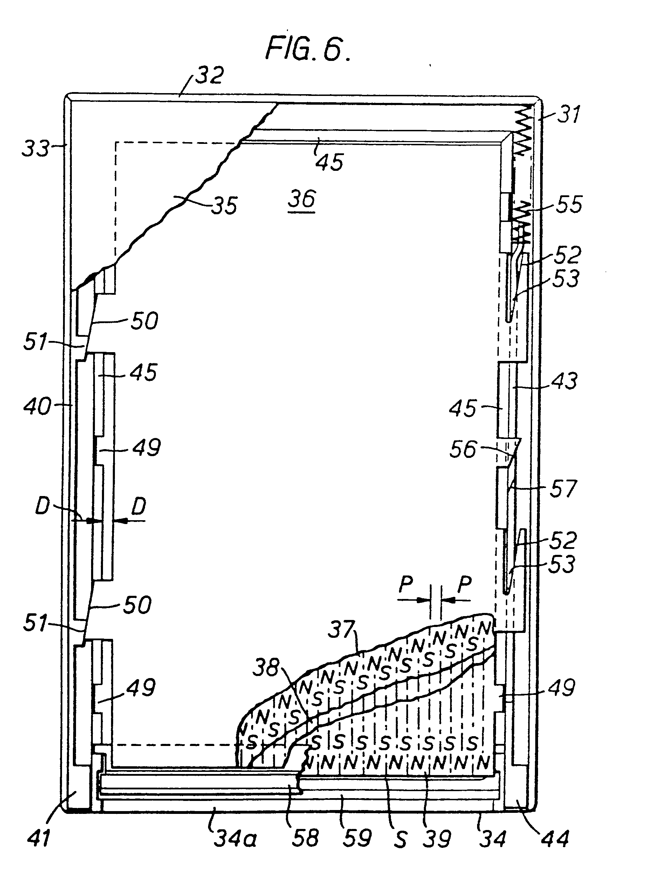

In Fig. 6 weist die Kassette vier Rahmenteile 31 bis 34 auf. In dem Rahmenteil 34 ist ein Schlitz 34a ausgebildet, über welchen der Film eingebracht und aus welchem er entnommen werden kann. Die Aussenplatte 35 ist zum grossen Teil entfernt. Unter der Aussenplatte 35 ist die Deckplatte 36 dargestellt. An der Unterseite der Deckplatte 36 ist eine dünne Magnetgummiplatte 37 angebracht, welche, wie dargestellt, über der ganzen Breite eine Magnetanordnung aufweist. Die Versetzung zwischen jedem Nordpol und jedem Südpol (der Polabstand) ist mit P-P bezeichnet. Unter der Magnetgummiplatte 37 ist eine dünne Polytetrafluoräthylenlage 38 und darunter ist die Andrückplatte 39 angeordnet, welche ebenfalls eine dünne Magnetplatte ist.

Auf der Unterseite der Andrückplatte 39 ist ein Verstärkerschirm S angebracht. Unter dem Schirm S sind (obwohl es nicht dargestellt ist) ein Röntgenfilm, ein weiterer Verstärkerschirm und die Bodenplatte der Kassette angeordnet.

Die Pole der Magnetplatten 37 und 39 sind über die ganze Länge der Platten (d.h. in Längsrichtung der Platten) ausgerichtet, während bei der Kassette in Fig. 2 bis 5 die Pole auf den Magnetplatten über die Breite der Platten (d.h. senkrecht zu deren Längsrichtung) ausgerichtet sind. Auf der einen Seite der Kassette ist eine Schubstange 43 mit einem Druckknopf 44 angeordnet.

Die Andrückplatte 39 ist teilweise von U-förmigen Wandungsteilen 45 umschlossen, die parallel zu den Rahmenteilen 31 bis 33 verlaufen. An der Andrückplatte 39 sind lappenförmige Ansätze festgelegt, welche in die U-förmigen Wandungsteile 45 passen. An der Deckplatte 36 sind entlang der Kante, die der Schubstange 40 gegenüberliegt, zwei keilförmige Teile 50 ausgebildet. Die keilförmigen Teile 50 liegen, wie dargestellt, an kleineren keilförmigen Teilen 51 an, die an der Schubstange 40 ausgebildet sind. An der Deckplatte 36 sind entlang der Kante, die der Schubstange 43 gegenüberliegt, zwei keilförmige Teile 52 ausgebildet. Die keilförmigen Teile 52 liegen, wie dargestellt, an nach oben vorstehenden Teilen 53 der Schubstange 43 an. Auf die Schubstangen 40 und 43 drückt jeweils eine Feder, wobei jedoch nur die auf die Schubstange 43 drückende Feder 55 dargestellt ist. Ferner ist an der Deckplatte 36 entlang der Kante, welche der Schubstange 43 gegenüberliegt, ein weiterer keilförmiger Ansatz 56 ausgebildet. Nahe bei dem keilförmigen Ansatz, aber nicht an diesem anliegend, ist ein weiterer Keil 57 dargestellt, welcher an der Schubstange 43 ausgebildet ist. Ferner ist eine lichtabschirmende Einrichtung 58 dargestellt, welche in eine in dem Schlitz 34a festgelegte Rille eingreift.

Die Kassette in Fig. 6 ist in der geschlossenen Stellung wiedergegeben, wobei die Magnetpole in den zwei Platten 37 und 39 miteinander zur Deckung gebracht sind. Das heisst, durch die Abstossungskräfte zwischen den zwei Magnetplatten, wird die Platte 39 sehr fest an den Schirm S gedrückt. In dieser geschlossenen Stellung stösst die Deckplatte 36 gegen die rechte Wandung der U-förmigen Wandungsteile 45. Sie weist von der linken Wandung des U-förmigen Wandungsteils den Abstand D-D auf, welcher gleich dem Polabstand P-P ist.

Um die Kassette zu öffnen, werden die beiden Druckknöpfe 41 und 44 der Schubstangen 40 und 43 verschoben. Hierdurch wird die relative Lage der keilförmigen Teile 50 und 51 geändert. Die Teile 53 kommen von den keilförmigen Ansätzen 52 ausser Anlage, während der Keil 57 in wirksame Anlage mit dem keilförmigen Ansatz 56 kommt. Hierdurch wird dann die Deckplatte 36 quer zu der Kassette seitlich verschoben, bis ihre linke Seite gegen die linke Seite des U-förmigen Wandungsteils 45 stösst. Hierdurch wird dann die Lage der Deckplatte so geändert, dass sich die Nordpole der Platte 37 mit den Südpolen der Platte 39 decken. Durch diese Anziehungskraft wird dann die Platte 39 angehoben. Da die Deckplatte 36 gleichzeitig in der Kassette verschoben wird, wird durch ein (nicht dargestelltes) Federteil die lichtabschirmende Einrichtung 58 aus der Rille 59 herausgehoben, und dadurch der Schlitz 34a geöffnet. Hierdurch kann dann ein Röntgenfilm, welcher zwischen den Schirmen angeordnet ist, aus der Kassette herausfallen (wenn diese senkrecht angeordnet ist).

Der Druck auf die Druckknöpfe 41 und 44 wird dann freigegeben, und die auf die Schubstange 40 wirkende Feder bewirkt dann, dass die keilförmigen Teile 51 auf die keilförmigen Ansätze 50 wirken, wodurch dann die Deckplatte zwangsläufig quer zur Kassette verschoben wird. Gleichzeitig kommen die keilförmigen Teile 53 an der Schubstange 43 mit den keilförmigen Ansätzen 52 in Anlage, und die keilförmigen Teile 56 und 57 liegen nicht mehr länger wirksam aneinander an. Hierdurch ist dann die Deckplatte in die in Fig. 6 wiedergegebene, geschlossene Stellung zurückgekehrt. Gleichzeitig sitzt die lichtabschirmende Einrichtung 58 wieder in der Rille 59. Bei der Kassette gemäss der Erfindung kann selbstverständlich der Rahmen starr mit der Aussen- oder Bodenplatte verbunden sein.

Es gibt verschiedene Möglichkeiten, um die Anziehungskraft zwischen zwei Magnetanordnungen zu verringern. Beispielsweise können die Magnetpolreihen in ungleichmässigen Abständen voneinander oder so angeordnet sein, dass alle gleichnamigen Pole zur Deckung gebracht sind, wenn die Kassette geschlossen ist, aber nicht alle ungleichnamigen Pole einander gegenüberliegen, wenn die Kassette geöffnet ist.

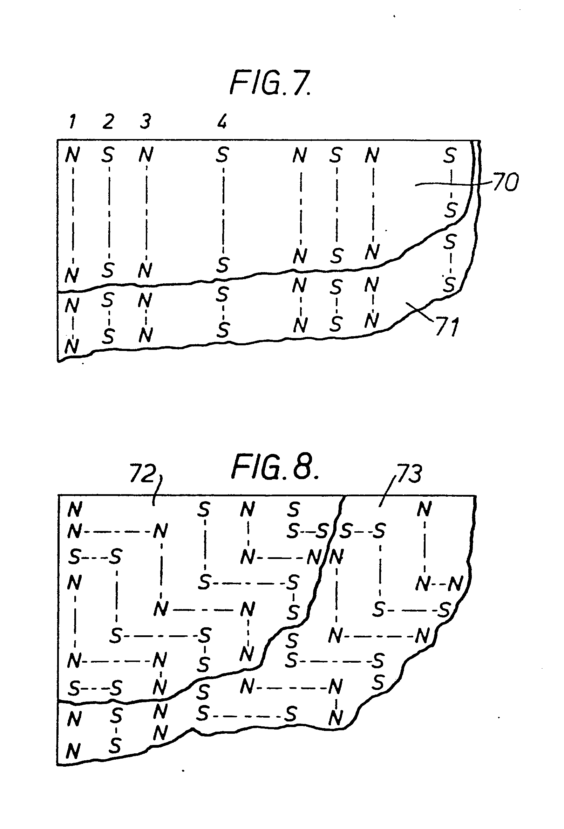

Eine solche Methode ist in Fig. 7 dargestellt, in welcher zwei Magnetgummiplatten 70 und 71, wie dargestellt, ausgerichtete Magnetpolreihen aufweisen. In Fig. 7 sind gleichnamige Pole einander gegenüberliegend angeordnet, so dass die beiden Platten sich im Zustand der Abstossung befinden. Wenn die obere Platte 70 um einen Polabstand seitlich nach rechts verschoben ist, dann liegen ungleichnamige Pole einander gegenüber, mit der Ausnahme, dass die Nordpole der Reihe 3 keine entsprechende Anordnung von Südpolen und die Südpole der Reihe 4 keine entsprechende Anordnung von Nordpolen aufweisen.

In Fig. 8 ist noch eine kompliziertere Anordnung von Magnetpolen auf Platten 72 und 73 dargestellt. In der in Fig. 8 wiedergegebenen Stellung liegen gleichnamige Pole einander gegenüber; wenn die Platte 72 jedoch bezüglich der Platte 73 bewegt wird, sind die Mehrzahl der einander gegenüberliegenden Pole ungleichnamige Pole, jedoch liegen auch einige gleichnamige Pole einander gegenüber. Hierdurch ist die Anziehungskraft zwischen den zwei Platten verringert. Um die Anziehungskraft zwischen zwei Platten aus magnetischem Material zu verringern, kann eine Platte bezüglich der anderen Platte um mehr oder weniger als einen Polabstand verschoben werden, so dass ungleichnamige Pole nicht genau zur Deckung gebracht sind.

## Patentansprüche

1. Filmkassette mit einem Rahmen, an welchem eine ebene, feststehende Aussenplatte und eine ebene, feststehende Bodenplatte angebracht sind, zwischen welchen beiden Platten eine verschiebbare Andrückplatte angeordnet ist, dadurch gekennzeichnet, dass die Andrückplatte (13; 39), wenn die Kassette geschlossen ist, in einer wirksamen Stellung durch die magnetische Abstossungskraft gehalten ist, die zwischen einer ersten Anordnung von Permanentmagnetpolen wechselnder Polarität, welche Anordnung in der Andrückplatte (13; 39) integriert oder an der Andrückplatte (13; 39) angebracht ist, und einer zweiten damit zusammenwirkenden Anordnung von Permanentmagneten, die an einer parallel angeordneten und an dem Rahmen (6; 31; 34) der Kassette gehaltenen Deckplatte (17; 36) angebracht ist, ausgeübt wird, wobei die Andrückplatte (13; 39) aus der wirksamen Stellung zurückschiebbar ist, wodurch die parallel angeordnete Deckplatte (17; 36) in eine Stellung verschoben wird, in welcher die Magnetpole der ersten Magnetpolanordnung die ungleichnamigen Pole der zweiten Magnetpolanordnung anziehen, wodurch die Andrückplatte (13; 39) zu der parallel angeordneten Deckplatte (17; 36) hin bewegt wird, so dass dann die Kassette offen ist.

2. Filmkassette nach Anspruch 1, dadurch gekennzeichnet, dass die parallele Deckplatte (17; 36) durch Einwirken auf zwei Schubteile (8, 9) oder Schubstangen (40, 43) verschoben wird, welche mit der parallelen Deckplatte (17; 36) verbunden sind, und welche jeweils auf verschiedenen Seiten des Rahmens (6; 31 bis 37) angeordnet sind, um eine lineare Bewegung zwischen einer ersten Stellung, welche dem geschlossenen Zustand der Kassette entspricht, und einer zweiten Stellung, welche dem offenen Zustand der Kassette entspricht, zu bewirken.

3. Filmkassette nach einem der Ansprüche 1 oder 2, dadurch gekennzeichnet, dass dünnes Kunststoffmaterial (15; 38) mit einer niedrigen Reibung an der Oberfläche zwischen den zwei Magnetanordnungen vorgesehen ist.

4. Filmkassette nach Anspruch 3, dadurch gekennzeichnet, dass das Kunststoffmaterial (15; 38) eine dünne Lage Polytetrafluoräthylen ist.

5. Filmkassette nach einem der Ansprüche 1 bis 4, dadurch gekennzeichnet, dass die beiden Magnetanordnungen einzelne Magnete aufweisen.

6. Filmkassette nach einem der Ansprüche 1 bis 4, dadurch gekennzeichnet, dass die beiden Magnetanordnungen aus dünnen Platten bestehen, welche eine Anordnung von integrierten Magneten enthalten.

7. Filmkassette nach Anspruch 6, dadurch gekennzeichnet, dass die Andrückplatte (13) aus einer dünnen Platte besteht, welche eine Anordnung von integrierten Magneten (14) enthält.

8. Filmkassette nach einem der Ansprüche 6 oder 7, dadurch gekennzeichnet, dass die dünne Platte, welche eine Anordnung von integrierten Magneten enthält, das als Magnetgummi bekannte Material ist.

9. Filmkassette nach einem der Ansprüche 6 bis 8, dadurch gekennzeichnet, dass die Magnetpole in den beiden dünnen Platten (70, 71; 72, 73) so angeordnet sind, dass eine maximale Abstossungskraft, aber keine maximale Anziehungskraft, erreicht ist.

10. Filmkassette nach einem der Ansprüche 2 bis 9, dadurch gekennzeichnet, dass die beiden Schubteile (8, 9) mit der Deckplatte (17) verbunden sind, und dass die Deckplatte (17) zusammen mit den Schubteilen (8, 9) verschoben wird, wenn diese linear verschoben werden.

11. Filmkassette nach einem der Ansprüche 2 bis 9, dadurch gekennzeichnet, dass die Schubstangen (40, 43) mit der Deckplatte (36) durch druckausübende Einrichtungen (50, 51; 52, 53; 56, 57) verbunden sind, und dass, wenn die Schubstangen (40, 43) betätigt werden, die Deckplatte (36) quer zu der Kassette im rechten Winkel zu der linearen Verschiebungsbahn der Schubstangen (40, 43) in ihrer eigenen Ebene verschoben wird.

12. Filmkassette nach Anspruch 11, dadurch gekennzeichnet, dass die druckausübenden Einrichtungen eine Reihe von in Anlage bringbaren, keilförmigen Teilen (50, 51; 52, 53; 56, 57) sind, die an den Schubstangen (40, 43) bzw. an der Deckplatte (36) festgelegt sind.

## Claims

1. A film cassette having a frame to which is attached a flat, fixed outer plate and a flat, fixed bottom plate, between which two plates there is arranged a slidable pressure plate, characterized in that, when the cassette is closed, the pressure plate (13; 39) is held in an operative position by the force of magnetic repulsion exerted between a first array of permanent magnetic poles of alternating polarity, which array is integral with or attached to the pressure plate (13; 39), and a second array of interacting permanent magnets attached to a parallel top plate (17; 36) fixed to the frame (6; 31; 34) of the cassette, the pressure plate (13; 39) being retractable from the operative position by causing said parallel top plate (17; 36) to slip to a position in which the magnetic poles of the first array of magnetic poles attract the dissimilar poles of the said second array, thereby moving the said pressure plate (13; 39) towards the said parallel top plate (17; 36), thus opening the cassette.

2. A film cassette according to claim 1, wherein the parallel top plate (17; 36) is caused to slide by acting on two push components (8, 9) or push rods (40, 43) which are coupled to the parallel top plate (17; 36) and which are located one at each of opposite sides of the frame (6; 31 to 37), for linear movement between a first position corresponding to the closed state of the cassette, and a second position corresponding to the open state of the cassette.

3. A film cassette according to either claim 1 or claim 2, wherein thin plastics material (15; 38) having a low friction surface is present between the two arrays of magnets.

4. A film cassette according to claim 3, wherein the plastics material (15; 38) is a thin layer of polytetrafluoroethylene.

5. A film cassette according to any one of claims 1 to 4, wherein both arrays of magnets comprise individual magnets.

6. A film cassette according to any one of claims 1 to 4, wherein both arrays of magnets consist of thin plates which contain integrally an array of magnets.

7. A film cassette according to claim 6, wherein the pressure plate (13) consists of a thin plate which contains integrally an array of magnets (14).

8. A film cassette according to either claim 6 or claim 7, wherein the thin plate which contains integrally an array of magnets is the material known as magnetic rubber.

9. A film cassette according to any one of claims 6 to 8, wherein the poles of the magnets in the two thin plates (70, 71; 72, 73) are so arranged that maximum repulsive force is achieved but not maximum attractive force.

10. A film cassette according to any one of claims 2 to 9, wherein the two push components (8, 9) are connected to the top plate (17), and the top plate (17) slides together with the push components (8, 9) when these are moved linearly.

11. A film cassette according to any one of claims 2 to 9, wherein the push rods (40, 43) are coupled to the top plate (36) by pressure applying means (50 , 51; 52, 53; 56, 57), and when the push rods (40, 43) are actuated, the top plate (36) slips across the cassette at right angles to the linear path of the push rods (40, 43), moving in its own plane.

12.. A film cassette according to claim 11, wherein the pressure applying means are a series of engaging wedges (50, 51; 52, 53; 56, 57) located on the push rods (40, 43) and on the top plate (36).

**Revendications**

1. Cassette pour film avec un cadre sur lequel est monté une plaque extérieure (6) plane et une plaque de fond fixe plane, entre lesquelles est disposée une plaque d'appui mobile, caractérisée en ce que, quand la cassette est fermée, la plaque d'appui (13; 39) est maintenue dans une position de travail par la force de répulsion magnétique qui s'exerce entre un premier ensemble de pôles magnétiques permanents de polarités alternées, cet ensemble étant intégré dans la plaque d'appui (13; 39) ou monté sur la plaque d'appui (13; 39), et un deuxième ensemble coopérant d'aimants permanents qui est monté sur une plaque de couverture (17; 36) disposée parallèlement et maintenue sur le cadre (6; 31; 34) de la cassette, la plaque d'appui (13; 39) pouvant être déplacée hors de la position de travail, de sorte que la plaque de couverture (17; 36) disposée parallèlement est déplacée dans une position dans laquelle les pôles magnétiques du premier ensemble magnétique attirent les pôles de noms contraires du deuxième ensemble de pôles magnétiques, de sorte que la plaque d'appui (13; 39) se déplace vers la plaque de couverture (17; 36) disposée parallèlement et que la cassette est ainsi ouverte.

2. Cassette pour film selon la revendication 1, caractérisée en ce que la plaque de couverture (17; 36) parallèle est déplacée par l'action de deux pièces de poussée (8, 9) ou tiges de poussée (40, 43) qui sont accouplées avec la plaque de couverture (17; 36) parallèle, et qui sont disposées chacune sur un côté différent du cadre (6; 31 à 37), pour produire un mouvement linéaire entre une première position qui correspond à l'état fermé de la cassette et entre une deuxième position qui correspond à l'état ouvert de la cassette.

3. Cassette pour film selon la revendication 1 ou 2, caractérisée en ce qu'une mince matière plastique (15; 38) avec un faible frottement est prévue sur la surface entre les deux ensembles magnétiques.

4. Cassette pour film selon la revendication 3, caractérisée en ce que la matière plastique (15; 38) est une mince couche de polytétrafluoréthylène.

5. Cassette pour film selon l'une des revendications 1 à 4, caractérisée en ce que les deux ensembles magnétiques comportent des aimants individuels.

6. Cassette pour film selon l'une des revendications 1 à 4, caractérisée en ce que les deux ensembles magnétiques consistent en des plaques minces qui contiennent un ensemble d'aimants intégrés.

7. Cassette pour film selon la revendication 6, caractérisée en ce que la plaque d'appui (13) consiste en une mince plaque qui contient un ensemble d'aimants intégrés (14).

8. Cassette pour film selon l'une des revendications 6 ou 7, caractérisée en ce que la mince plaque qui contient un ensemble d'aimants intégrés est d'une matière connue comme caoutchouc magnétique.

9. Cassette pour film selon l'une des revendications 6 à 8, caractérisée en ce que les pôles magnétiques dans les deux minces plaques (70, 71; 72, 73) sont disposés de manière qu'une force de répulsion maximale soit obtenue, mais pas une force d'attraction maximale.

10. Cassette pour film selon l'une des revendications 2 à 9, caractérisée en ce que les deux pièces de poussée (8, 9) sont accouplées avec la plaque de couverture (17), et en ce que la plaque de couverture (17) se déplace avec les pièces de poussée (8, 9) quand ces dernières sont déplacées linéairement.

11. Cassette pour film selon l'une des revendications 2 à 9, caractérisée en ce que les tiges de poussée (40, 43) sont accouplées avec la plaque de couverture (36) par des dispositifs exerçant une poussée (50, 51; 52, 53; 56, 57), et en ce que, quand les tiges de poussée (40, 43) sont actionnées, la plaque de couverture (36) est déplacée perpendiculairement à la cassette, à angle droit par rapport au trajet de déplacement linéaire des tiges de poussée (40, 43) dans leur propre plan.

12. Cassette pour film selon la revendication 11, caractérisée en ce que les dispositifs exerçant une poussée sont une série de pièces en forme de coin (50, 51; 52, 53; 56, 57) pouvant être amenées en appui et qui sont fixées sur les tiges de poussée (40, 43) ou sur la plaque de couverture (36).

# FIG. 1.

FIG.2.

FIG.3.

FIG.4.

0 018 564

FIG.5.

## FIG.6.

## FIG.7.

## FIG.8.